# EUROPEAN PATENT APPLICATION

(11) **EP 2 602 848 A1**
(43) Date of publication of application: **12.06.2013**
(21) Application number: 11814368.4
(22) Date of filing: 10.06.2011
(51) Int. Cl.: H01M 4/134, H01M 4/1395, H01M 4/62

(54) **NEGATIVE ELECTRODE FOR LITHIUM-ION SECONDARY BATTERY, AND MANUFACTURING METHOD FOR SAME**

(30) Priority: 02.08.2010 JP 2010173886
(71) Applicant: Nissan Motor Co., Ltd, Yokohama-shi, Kanagawa 220-8623 (JP)
(72) Inventor: OGIHARA, Wataru, Yokohama-shi,Knagawa 221-0023 (JP)
(74) Representative: Hager, Thomas Johannes
(86) International application number: PCT/JP2011/063383
(87) International publication number: WO 2012/017738

(57) **Abstract**

The present invention relates to a negative electrode for a lithium ion secondary battery obtainable by preparing a slurry of negative electrode active material by mixing a negative electrode active material containing silicon as a main component, at least one binder material selected from the group consisting of polyimide, polyamide and polyamideimide, and prepolymers of the same, and at least one binding enhancing agent selected from the group consisting of polyvalent carboxylic acid, its derivatives and polyvalent amine in a solvent; and applying the negative electrode active material on a surface of a current collector and heat treating under anoxic conditions.

## Description

### TECHNICAL FIELD

The present invention relates to a negative electrode for a lithium ion secondary battery and manufacturing method of the same. More particularly, the present invention relates to techniques to improve the cycle characteristics of the lithium ion secondary battery in the case where silicon negative electrode active material is contained as the negative electrode active material.

### BACKGROUND ART

Recently, in order to deal with global warming, reduction of carbon dioxide emissions is strongly desired. Expectations are concentrated in the reduction of carbon dioxide emissions through the introduction of electric vehicles (EV) and hybrid electric vehicles (HEV) in the automotive industry. The development of secondary batteries for motor drive, which presents the key to the practical application of these vehicles, are active.

As a secondary battery for driving the motor, it is required for such battery to exhibit output characteristics with very high energy density as compared to the consumer lithium ion secondary battery for use in such as cell phones and laptops. Therefore, the lithium ion secondary battery having the highest theoretical energy among all the batteries has attracted attention and is being rapidly developed.

The lithium ion secondary battery generally has a structure in which both a positive electrode obtained by coating a positive electrode active material and the like on the surface of a current collector by using a binder and a negative electrode obtained by coating a negative electrode active material and the like on a surfaces of the current collector by using a binder are connected to each other via an electrolyte layer and housed in a battery case.

In the lithium ion secondary battery such as this, as negative electrode active material, a carbon/graphite based negative electrode active material, or an alloy based negative electrode active material alloy susceptible to be alloyed with Li, such as silicon (Si), or tin (Sn). Among them, in particular, the silicon negative electrode active material containing silicon is highly expected for a candidate of negative electrode active material for vehicle battery because of its high energy density per unit weight as compared with the carbon/graphite negative electrode active material and tin-based negative electrode active material.

On the other hand, in a silicon-based negative electrode active material, expansion and contraction due to absorption and desorption of lithium ions is large. For example, while the volume expansion is about 1.2 times in the graphite when lithium ions are occluded, that for the silicon negative electrode can reach approximately four times. With this great expansion/contraction of silicon, along with repeating charge and discharge, the electrode structure is destroyed, silicon dropped from the conductivity network would become irreversible capacity, and the electrolyte is decomposed in the active surface of broken silicon broken and other phenomena may take place. Since these phenomena contribute to reduced cycle characteristics of the lithium ion secondary battery, when silicon negative electrode active material is used as the negative electrode active material, a binder of high strength is devised to use for keeping the electrode structure integrity.

For example, in Patent Literature 1, in a lithium ion secondary battery containing a silicon-based negative electrode, the surface roughness Ra of the current collector of conductive metal foil more than a certain value and use of polyimide (PI) as a binder material are proposed. According to this literature, due to a high decomposition starting temperature of polyimide binder without the binder being completely decomposed after the heat treatment for sintering, the adhesion between the current collector and the negative electrode active material particles is increased resulting in improvement of cycle characteristics.

### PRIOR ART DOCUMENTS

### PATENT LITERATURE

Patent literature 1: U.S. Patent Application Publication No. 2004/043294

### SUMMARY OF THE INVENTION

### PROBLEM THAT THE IVNETION IS TO SOLVE

However, suppressing deterioration in cycle characteristics is insufficient even when the technique described in Patent Literature 1 is used. Thus, a further improvement has been desired.

The present invention aims to provide mechanism for improving the cycle characteristics of the lithium ion secondary battery in cases where the negative electrode active material contains silicon based negative electrode active material.

### MECHANISM FOR SOLVEING THE PROBLEM

The negative electrode for a lithium ion secondary battery according to the present invention is characterized in that, during the preparation of a slurry of negative electrode active material containing negative electrode active material and a binder material, a binding property improving or enhancing agent is used. Note that the negative electrode active material contains mainly silicon. The binder material is at least one element selected from the group consisting of polyimide, polyamide and polyamideimide, and prepolymers of the same. In addition, the binding improving or enhancing agent is at least one selected from the group consisting of polyvalent carboxylic acid and derivatives of the same and polyvalent amine.

Further, the negative electrode for a lithium ion secondary battery in an embodiment according to the present invention may be prepared by a method comprising the steps (1) and (2). (1) A slurry of negative electrode active material is prepared by mixing the negative electrode active material, the binder material and the binding improving or enhancing agent in a solvent. (2) The slurry of negative electrode active material is coated or applied on the surface of current collector and heat treated under oxygen-free or anoxic condition.

Further, the negative electrode for a lithium ion secondary battery in an another embodiment according to the present invention may be prepared by a method comprising the steps of (1) to (3) below. (1) Mixing the negative electrode active material and a binding improving or enhancing agent in a solvent, and removing the solvent to prepare the negative electrode active material. (2) preparing a slurry of negative electrode active material by mixing the negative electrode active material and the binder material in a solvent. (3) applying the slurry of negative electrode active material on the surface of current collector and heat-treating under oxygen-free or anoxic condition.

### EFFECTS OF INVENTION

According to the present invention, the silicon negative electrode active material containing silicon and the binder material are chemically bound through the binding improving or enhancing agent, adhesion or binding property between the negative electrode active material and the binder material is increased. Therefore, destruction of the electrode structure due to charging and discharging repetition; falling off of the silicon negative electrode active material from conductive network, and decomposition of the electrolyte at the broken interface of the silicon negative electrode active material; and like phenomena are suppressed, so that cycle characteristics can be improved in the lithium ion secondary battery.

### BRIEF DESCRIPTION OF THE DRAWINGS

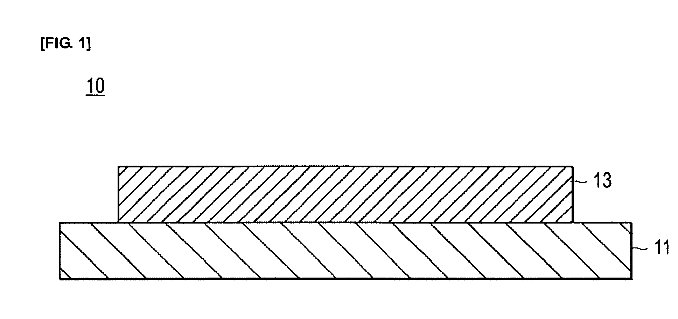

Figure 1 Is a cross-sectional view schematically showing a negative electrode for a lithium ion secondary battery in an embodiment according to the present invention.

### EMBODIMENTS FOR CARRYING OUT THE INVENTION

In the following, description will be made of a preferred embodiment according to the present invention, the technical scope of the present invention should be determined based on the appended claims and not limited to the embodiments below.

### <First embodiment>

The negative electrode for a lithium ion secondary battery in an embodiment according to the present invention is characterized by a method comprising steps (1) and (2).
(1) A slurry of negative electrode active material is prepared by mixing the negative electrode active material, binder material and the binding enhancing or improving agent in a solvent.
(2) The slurry of negative electrode active material is coated or applied on the surface of current collector and heat treated under anoxic or oxygen-free or anoxic condition.

Figure 1 is a cross-sectional view schematically showing a negative electrode for a lithium ion secondary battery in an embodiment according to the present invention. According to Figure 1, negative electrode 10 has a structure consisting of a current collector 11 made of copper foil, and negative electrode active material layer 13 formed on the surface of the current collector 11.

Note that, in the negative electrode of Figure 1, the negative electrode active material layer 13 has been formed only on one surface of the current collector 11, negative electrode 13 active material layer may be formed on both surfaces of the current collector 11. Also, the embodiment of a bipolar electrode in which negative electrode active material is applied on one surface of current collector 13 and the positive electrode active material is coated on the other surface of current collector 11 is to be included in the negative electrode according to the present invention.

According to the first embodiment, negative electrode active material layer 13 may be formed by mixing silicon powder, polyamic acid and pyromellitic acid diethyl in N-methyl-2- pyrrolidone, a slurry of negative electrode active material thus obtained is coated on the surface of current collector 10, followed by heat treatment under oxygen-free or anoxic conditions. Hereinafter, a negative electrode for a lithium ion secondary battery and the manufacturing method of the same will be described in more detail.

First, description of the step of preparing a slurry of the negative electrode active material is described (1) above. The negative electrode active material slurry of the present embodiment is obtained, by mixing in a solvent, the negative electrode active material, binder material, and binding improving or enhancing agent.

The negative electrode active material has a function to release ions during discharge state and to occlude ions during charging state. This embodiment is characterized in the use of the negative electrode active material containing silicon (Si) as a main component.
As described above, when constituting the negative electrode active material using a silicon based negative electrode active material containing silicon, as compared with the case of using a conventional carbon/graphite negative electrode active material as the negative electrode active material, high energy density can be achieved. In this present discretion, "the negative electrode active material containing silicon (Si) as a main component" means that the ratio of mass occupied by silicon element in the total mass of the negative electrode active material is not less than 50% by mass . From the viewpoint for achieving a larger theoretical capacity, this ratio is preferably 70% or more by mass, more preferably 80 % or more by mass, even more preferably 90 % or more by mass, and particularly preferably 95% or more by mass , and most preferably 100% by mass .

The silicon based negative electrode active material is not particularly limited, such as Si alone, silicon oxide such as SiO2 and SiO and the like may be enumerated. In addition, the silicon as negative electrode active material is preferably doped with a predetermined element (doping element). Although the conductivity of silicon is originally low, by using as the negative electrode active material with silicon being doped with the predetermined doping element, silicon is made to indicate the nature of the semiconductor. That is, a low conductivity of silicon-based negative electrode active material is improved so that even more effective function as a negative electrode active material can be achieved. The doping element is preferably one or more elements selected from the group consisting of Group 13 or Group 15 element in the periodic table. More specifically, as elements of group 13 of the periodic table, boron (B), aluminum (Al), gallium (Ga), indium (In), thallium (TI), and the like are available. Also, as elements of Group 15 in the periodic table, nitrogen (N), phosphorus (P), arsenic (As), antimony (Sb), bismuth (Bi), and the like are provided. There is no particular limitation on the dose of the doping element to the silicon, preferably at least 1 × 10⁻²⁰ atom/cm³, more preferably 1 × 10⁻¹⁸ atom/cm³, particularly preferably 1 × 10⁻¹⁵, from the viewpoint of improving the electrical conductivity of the negative electrode active material layer. It should be noted that the silicon-based negative electrode active material may be used alone, or in combination of two or more thereof.

, Note that the negative electrode active material of the present embodiment, as long as mainly containing silicon, a negative electrode active material that does not contain silicon may be added in addition to the silicon negative electrode active material. Carbon based negative electrode active material such as graphite, soft carbon, hard carbon, etc. or metal active material such as tin based negative electrode,I or lithium-transition metal composite oxide such as lithium-titanium composite oxide (e.g., lithium titanate: Li₄Ti₅O₁₂) may be enumerated as negative electrode active material containing no silicon.

The average particle size of the silicon-based negative electrode active material is not particularly limited, from the viewpoint of increasing the capacity of the negative electrode active material, reactivity and durability cycle, however, it is preferably from 1 to 100µm, and more preferably 1 to 20µm. Within such range, an increase in the internal resistance of the battery during charging and discharging under a high output condition is suppressed, current may be drawn from the battery sufficiently. In addition, if the silicon-based negative electrode active material is made of secondary particles having an average particle diameter of primary particles constituting the secondary particles, it is preferable that the average particle size of the primary particles is within a range between 10nm and 100µm. If it is more than 10nm of average particle diameter of primary particles, the conductive path of the negative electrode active material is well formed, it is possible to suppress an increase in resistance. Further, when the average particle diameter of 100µm or less of primary particles, it is possible to prevent deterioration of the battery capacity by overvoltage. However, depending on the manufacturing method, it is needless to say that silicon-based negative electrode active material may not intended to form secondary particles by aggregation or due to bulk. The particle size of the silicon-based negative electrode active material or that of primary particle size are measurable by using the median diameter obtained by laser diffraction method. The shape of the silicon negative electrode active material is different depending its type and manufacturing method. Fore example, they may be spherical (powder), plate-like, acicular, columnar, and horned and the like. The present invention is not limited to these shapes, but can be used without any problems of any shape. Preferably, it is desirable to select the best suitable shape capable of improving battery characteristics such as charge and discharge characteristics.

### [Binder material]

In the negative electrode active material layer, the binder material has a function to maintain the integrity of electrode structure by coupling the negative electrode materials each other, the negative electrode active material and current collector. In addition, the negative electrode active material layer is conductive additive, but may be added if necessary, binder material also has a function to a binder and a negative electrode active material and conductive additive, the maintaining the conductive network.

The binder material in the present embodiment is characterized in that it includes at least one selected from the group consisting of polyimide, polyamide, and polyamide-imide and prepolymer thereof. There is no structural limitations posed. As far as applicable in the relevant fields, all the polyimide, polyamide, polyamideimide may be suitably selected. Note that in this embodiment, Note that the term "prepolymers" as used herein refers to an intermediate product stopped at an appropriate time during polymerization reaction or condensation reaction of the monomer. More specifically, the polyamic acid may be an example of a polyimide prepolymer.

The molecular weight of the binder material is required to be greater than 1000 in order to distinguish from binding enhancing or improving agent described later. More preferably, the number average molecular weight of the binder material is 10000 to 1000000. Thus, by using the polymeric material with high molecular weight rather than a monomer as a binder material, the binding property (particularly, binding property with current corrector) may be improved. In the present description, the number average molecular weight adopts a value obtained by GPC (gel permeation chromatography) with polystyrene as the standard substance.

### [improving agent binder]

In this embodiment, the binder improving agent has a function of improving the binding of the silicon negative electrode active material and a binder material. A binding improving or enhancing agent of the present embodiment is characterized in that it comprises at least one element selected from the group consisting of polyvalent carboxylic acid, its derivatives, and polyvalent amine. In addition, the binding improving or enhancing agent according to the present embodiment is required to distinguish the binder material in that the molecular weight is less than 1000.

The polyvalent carboxylic acid is preferably a dicarboxylic acid or tetracarboxylic acid capable of forming anhydride in the molecule. More specifically, dicarboxylic acid or tetracarboxylic acid such as
4,4 '-(hexafluoroisopropylidene) diphthalic acid,
3,3 ', 4,4' - diphenyl sulfone tetracarboxylic acid,
1,2,3,4 -cyclobutane tetracarboxylic acid,
1,2,3,4 -cyclopentane tetracarboxylic acid,
3,3', 4,4' - benzophenone tetracarboxylic acid,
3,3', 4,4' - diphenyl sulfone tetracarboxylic acid, 3,4,9,10 - perylene tetracarboxylic acid, 4,4' - bifutaru acid, 4,4'- oxydiphthalic acid,
5 - (2,5 - dioxy tetrahydrofuryl) -3 - methyl-3- cyclohexane-1 ,2-dicarboxylic acid
bicyclo [2.2.2] oct-7- ene-2 ,3,5,6- tetracarboxylic acid,
naphthalene-1 ,4,5,8- tetracarboxylic acid,
pyromellitic acid, and
3,3 ', 4,4'- biphenyltetracarboxylic acid
and the like may be examples.

The derivatives of polycarboxylic acid is preferably derivatives derived from a polyvalent carboxylic acid capable of forming an acid anhydride in the molecule. More specifically, such as a carboxylic acid anhydride or half esters (as of one of the dicarboxylic acid forming a carboxylic acid anhydride is esterified) and the like may be examples.

The carboxylic acid anhydride may include, but not particularly limited, for example,
4,4'- (hexafluoroisopropylidene) diphthalic anhydride,
3,3', 4,4'- diphenylsulfone tetracarboxylic acid anhydride,
1,2,3,4 - cyclobutane tetracarboxylic acid anhydride,
1,2,3,4 - cyclopentane tetracarboxylic anhydride,
3,3', 4,4' - benzophenone tetracarboxylic acid anhydride,
3,3', 4,4' -diphenylsulfone tetracarboxylic acid anhydride ,
3,4,9,10 - perylene tetracarboxylic acid anhydride,
4,4'- Bifutaru anhydride,
4,4'- oxydiphthalic anhydride,
5 - (2,5 - di-oxy-tetrahydrofuryl) -3 - methyl-3-cyclo hexene-1, 2- dicarboxylic acid anhydride, bicyclo [2.2.2] oct-7 - ene-2 ,3,5,6 - tetracarboxylic acid anhydride,
naphthalene-1-4,5,8 -tetracarboxylic acid anhydride,
pyromellitic anhydride and
3,3',4,4'- biphenyl tetracarboxylic acid dianhydride

Further, the half esters described above may include, yet not particularly limited, for example, half alkyl esters of the above carboxylic acid anhydride and the like. There is no particular limitation also in this case regarding the alkyl group, and for example, methyl group, ethyl group, n-propyl group, isopropyl group, n-butyl group, isobutyl group, sec-butyl group, tert-butyl group, n-pentyl group, isopentyl group, neopentyl group, 1,2 - dimethylpropyl group, n-hexyl group, cyclohexyl group, 1,3 - dimethyl butyl group, 1 - isopropyl-propyl group, 1,2 - dimethyl-butyl group, n-heptyl group, 1, 4 - dimethylpentyl group, 2 -methyl- 1- isopropyl-propyl group, 1-ethyl-3 - methylbutyl group, n-octyl group, 2 -ethylhexyl group and the like may be employed..

The concrete compounds of the half ester above ethyl ester are, for example, 3,3', 4,4' - diphenyl sulfone tetracarboxylic acid diethyl, 1,2,3,4 - cyclobutane tetracarboxylic acid diethyl, 1,2,3,4 - cyclopentane tetracarboxylic acid diethyl, 3,3', 4,4' - benzophenone tetracarboxylic acid diethyl, 3,3', 4,4' - diphenyl sulfone tetracarboxylic acid diethyl, 3,4,9,10 - perylene tetracarboxylic acid diethyl, 4,4 '- Bifutaru acid diethyl, 4,4' - oxydiphthalic acid diethyl, 5 - (2,5 - di-oxy-tetrahydrofuryl) -3 - methyl-3--cyclohexane -1, 2- dicarboxylic acid ethyl, bicyclo [2.2.2] oct-7 - ene-2 ,3,5,6 - tetracarboxylic acid diethyl, naphthalene-1,4,5,8-tetracarboxylic acid diethy, pyromellitic acid diethyl, 3,3 ', 4,4' - biphenyltetracarboxylic acid diethyl.

Of the polycarboxylic acid and its derivatives, from the viewpoint of reactivity with the silicon negative electrode active material or the binder material, a carboxylic acid anhydride or half ester is preferable, and the half ester is more preferable.

As a polyvalent amine no particular limitation is posed, however, for example, p-phenylenediamine, p-aminobenzylamine, 4,4'-diaminodiphenyl ether, 3,3'-diaminodiphenyl ether, 3,4'- diaminodiphenyl ether, bis (4 - aminophenyl) sulfide, bis (4 - aminophenyl) sulfoxide, bis (4 - aminophenyl) sulfone, 4,4'- diaminodiphenyl methane, 4,4'- diaminodiphenylmethane , bis [4 - (4 - aminophenoxy) phenyl] ketone, bis [4 - (4 - aminophenoxy) phenyl] sulfide, bis [4 - (4 - aminophenoxy) phenyl] sulfoxide, bis [4 - (4-aminophenoxy) phenyl] sulfone, and bis [4 - (4-aminophenoxy) phenyl] ether. As shown in the examples below, the excellent cycle characteristics are also available when using a polyvalent amine.

The polycarboxylic acid and polyvalent amine above may be a compound which can be a monomer constituting polyimide, polyamides and polyamideimide and the prepolymers thereof and is used as the binder material of the present embodiment. These , polycarboxylic acid and polyvalent amine are considered to improve a binding property with silicon negative electrode active material and binder by combining chemically with both the binder and the silicon negative electrode active material. The Chemical Formula I shows how the silicon negative electrode active material and binder are chemically combined through a polycarboxylic acid. In addition, the Chemical Formula 2 below illustrates how the silicon negative electrode active material and binder are chemically combined through a polyvalent amine. When the silicon negative electrode active material contacts polycarboxylic acid (polyvalent amine), the silicon atoms present on the surface of silicon negative electrode active material (wavy lines) and one carboxyl group(or amino group) of polycarboxylic acid (or polyhydric amine) are covalently bonded (see upper part of Chemical Formula 1 (or Formula 2)). Then, the compound react with the polyamic acid as a binder to form an amide bond (middle of Chemical Formula 1 (or Chemical Formula 2)). Thereafter, the polyamic acid is imidized by heat treatment, and silicon negative electrode active material and polyimide are presumed to be chemically bound tvia a polyvalent carboxylic acid (or polyhydric amine). See lower part of Chemical Formula 1 or Formula 2. It should be noted that the technical scope of the present invention is intended to be defined by claims, even if there are effects of the present invention by a mechanism other than the above, It is not expected to affect the technical scope of the present invention in any way.

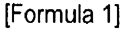

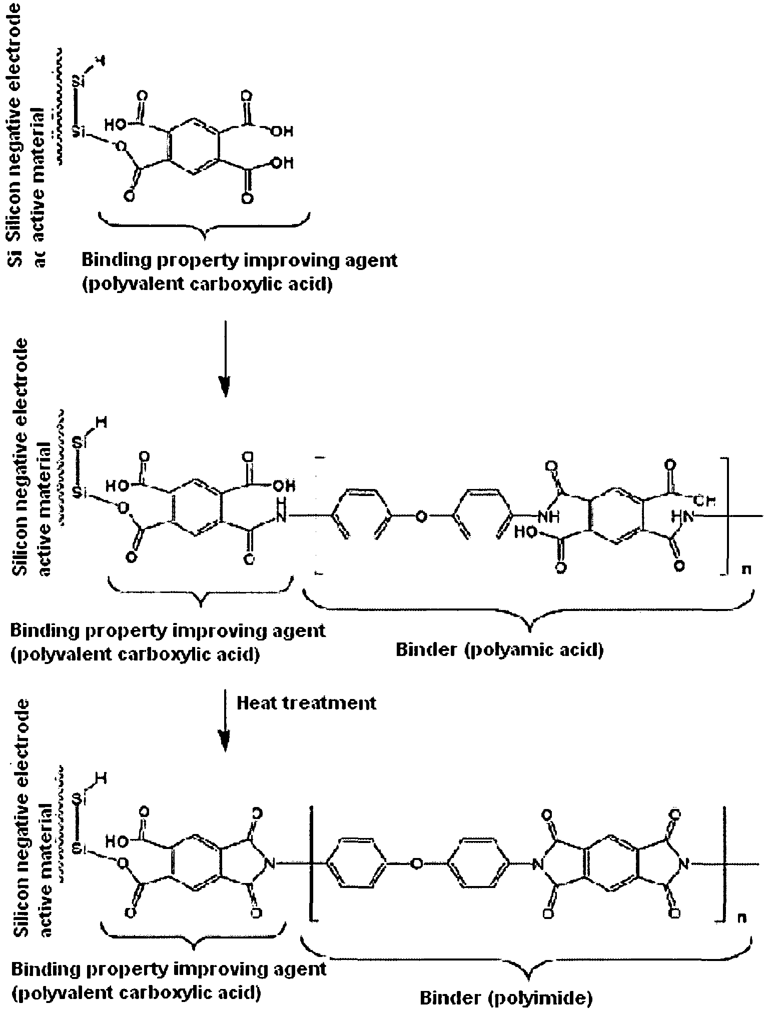

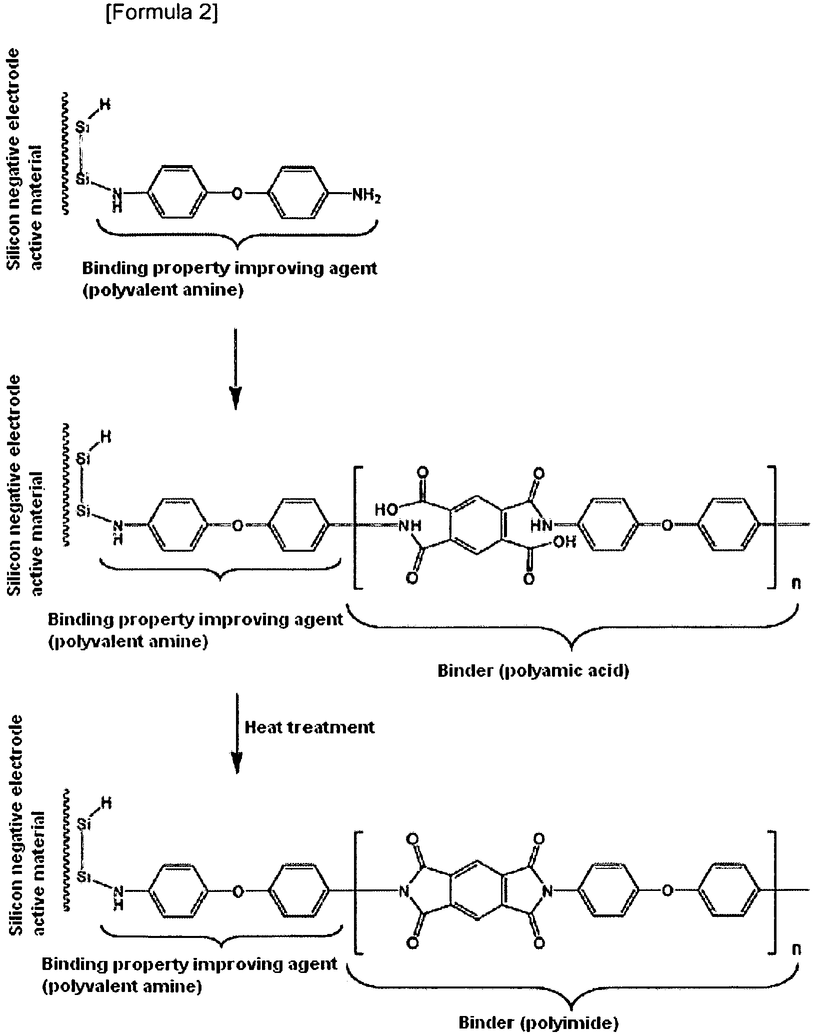

As addition amount of the binding property improving agent, it is preferably 0.1 to 10% by mass in relation to total mass of silicon based negative electrode active material. If it is more than 0.1% by mass of addition amount, the binding property with the binder, negative electrode active material may be further improved. At the addition amount less than 10 % by mass, too thick application of the binding property improving agent covering the surface of the silicon negative electrode active material will be avoided so that desired movement of lithium ions are maintained to prevent decrease in battery capacity..

### [solvent]

The solvent is added in order to adjust viscosity of the negative electrode active material slurry. Any solvent can be used without limitation as long as being used in the art. As an example, N-methyl-2-pyrrolidone (NMP), dimethylformamide, dimethylacetamide and dimethylformamide and the like may be used.

### [Other Additives]

As other additives, if necessary, such as a conductive additive, electrolyte salt (lithium salt), and ion-conducting polymer may be added. to the negative electrode active material slurry of the present embodiment.

The conductive additive denote the additives that are incorporated to improve the conductivity of the negative electrode active material layer. As a conductive additive is enumerated carbon materials such as carbon black like acetylene black, graphite, and vapor-grown carbon fibers and the like. When containing a conductive additive in the active material layer, the conductive network in the interior of the active material layer is formed effectively, that can contribute to improve the output characteristics of the battery.

As electrolyte salt (lithium salt), such as Li (C₂F₅SO₂) ₂N, LiPF₆, LiBF₄, LiClO₄, LiAsF₆, LiCF₃SO₃ Li, and the like may be used.

As examples of the ion conductive polymer, such polymers based on polyethylene oxide (PEO).or polypropylene oxide-based (PPO) and the like may be used.

The negative electrode active material slurry according to the present embodiment is prepared by mixing the above-mentioned negative electrode active material, binder material, and binding improving or enhancing agent in the solvent. There is no particular limitation on the order of mixing, by adopting the method in which the solution obtained by dissolving in a solvent the binder material in advance is mixed with the negative electrode active material and binding improving or enhancing agent, the negative electrode active material and binding improving or enhancing agent can be dispersed uniformly in the slurry.

Then, a process for coating the negative electrode active material described above (2) on the surface of a current collector, heat-treating under anoxic conditions is explained.

### [Collector]

The collector is composed of a conductive material and constitutes an electrode of battery with negative electrode active material disposed on its surface. The size of the collector is determined according to the sizes of the battery. For example, if the battery is used in a large sized battery requiring a high energy density, a current collector with a large area is used. There is no particular limitation on the thickness of the current collector too. The thickness of the current collector is not limitative but usually of about 1 to 100µm.

There is no particular limitation on the material constituting the current collector. For example, a metal or conductive polymer material or resin in which conductive filler is added to non-conductive polymer material. More specifically, the metal include aluminum, nickel, iron, stainless steel, titanium, and copper. In addition to these, a clad material of nickel and aluminum, or a clad material of copper and aluminum, or a combination of these metals as plating materials may be preferably used. Among them, from the viewpoint of electron conductivity and battery operating potential, aluminum, stainless steel, and copper is preferred.

Further, for example, as a conductive polymer material, such as polyaniline, polypyrrole, polythiophene, polyacetylene, polyparaphenylene, polyphenylene vinylene, and polyacrylonitrile, polyoxadiazole and the like may be enumerated. For having a sufficient conductivity without the addition of a conductive filler, conductive polymer materials such as thiese is advantageous in terms of weight reduction of the collector or the ease of the manufacturing process.

Examples of the non-conductive polymer material may be polyethylene (PE; high density polyethylene (HDPE), low density polyethylene (LDPE)), polypropylene (PP), polyethylene terephthalate (PET), polyether nitrile (PEN), polyimide (PI), polyamide-imide (PAI), polyamide (PA), polytetrafluoroethylene (PTFE), styrene - butadiene rubber (SBR), polyacrylonitrile (PAN), polymethyl acrylate (PMA), polymethyl methacrylate (PMMA), polyvinyl chloride (PVC), polyvinylidene fluoride (PVdF), and. polystyrene (PS). Such non-conductive polymeric materials may have a superior voltage withstanding and solvent resistance properties.

To the conductive polymer material or non-conductive polymer material of the above, a conductive filler may be added, if necessary. In particular, when the resin constituting a substrate of the current collector is made of only the non-conductive polymer, a conductive filler is inevitably required in order to impart conductivity to the resin. The conductive filler can be used without particular limitation as long as it is a substance having a conductivity. For example, as a material excellent in conductivity, voltage withstanding ability, and lithium ion barrier property, metals and conductive carbon and the like may be enumerated.. The metal is not particularly limited, at least one metal selected from the group consisting of K Ni, Ti, Al, Cu, Pt, Fe, Cr, Sn, Zn, In, Sb, or an alloy or metal oxide containing these metals. Further, the conductive carbon is not particularly limited and is selected to include at least one element from the group consisting of acetylene black, Vulcan, Black Pearl, carbon nanofibers, ketjen black, carbon nanotubes, carbon nanohorns, carbon nano-balloon, and fullerene.. The amount of addition of conductive filler Is not particularly limited when sufficient conductivity to the current collector may be imparted, but is, in general, about 5 to 35% by mass .

There is no particular limitation on how to apply a negative electrode active material slurry described above to the surface of the collector described above. A known method, such as screen printing, spray coating, electrostatic spray coating, ink-jet method is appropriately used. Also, the amount of applying the negative electrode active material slurry is not particularly limited, the thickness of the laminating direction of the anode active material layer formed on the surface of the current collector after the heat treatment is preferably 100nm to 100µ, more preferably between 1 t00µm, and even more preferably 1 to 10µm. Further, those skilled in the art will be adjusted accordingly.

Then, the negative electrode active material slurry applied to the surface of the current collector will be heat treated under anoxic conditions. In the present specification, the "oxygen-free or anoxic condition" means that the oxygen partial pressure is less than 100Pa. As a concrete form of oxygen-free or anoxic conditions, such as an inert gas atmosphere or vacuum conditions, such as nitrogen or argon may be mentioned.. When the heat treatment temperature is not particularly limited as long as the curing temperature of the binder material is advanced, 150 to 400 °C, preferably is 200 to 350 °C. Heat treatment time is not particularly limited, typically 1 minute to 20 hours, preferably 5 minutes to 6 hours again. Further, prior to the heating, in order to remove the solvent contained in the negative electrode active material slurry, you may be performed separately drying at a temperature between room temperature.and about 100 °C.

### <SECOND EMBPDIMENTI>

The negative electrode for a lithium ion secondary battery in an embodiment according to the present invention can be produced by the method comprising the steps of (1) to (3) below. (1) After mixing the negative electrode active material and a binding improving or enhancing agent in a solvent, removing the solvent, to prepare a negative electrode active material. (2) preparing a negative electrode active material slurry by mixing in a solvent material the negative electrode active material and binder, and (3) Applying to the surface of the current collector the negative electrode active material slurry , heat-treated in oxygen-free or anoxic conditions.

Note that, in the second embodiment, the negative electrode active material, binding property improving agent, solvent , binder material and other additives that may be added, if necessary, are the same as those used in the first embodiment described above. Therefore, a detailed description of each of these components is omitted here.

First, description is made of the process of preparing a negative electrode active material described in above (1). The negative electrode active material of the present embodiment is obtained by mixing in a solvent the negative electrode active material and a binding improving or enhancing agent followed by removing the solvent. There is no particular limitation on the method for removing the solvent,. For example, a method of drying under reduced pressure at a temperature between room temperature and about 100 °C may be employed. The negative electrode active material thus obtained in this manner is assumed to have a structure in which the binding improving or enhancing agent is chemically bonded to the surface of a silicon-based negative electrode active material.

Then, In step (2), the negative electrode active material obtained in step (1) and a binder material are mixed in a solvent , a negative electrode active material slurry is prepared. There is no particular limitation on the order of mixing, by adopting the method in which the solution obtained by dissolving in a solvent the binder material in advance is mixed with negative electrode active material, negative electrode active materials can be uniformly dispersed in the slurry. The solvent used here may be the same as that used in step (1), or it may be different. In this process, by contacting negative electrode active material with a binder material in a solvent, the binding enhancing agent chemically bound on the surface of the negative electrode active material will be chemically bound with binder material so that it is presumed that negative electrode active material is chemically bound with binder material through the binding enhancing agent.

Finally, In step (3), a negative electrode active material slurry obtained in step (2) is applied to a current collector surface, and heat-treated in oxygen-free or anoxic conditions. As the conditions of heat treatment, the same conditions as the first embodiment described above may be employed..

The first embodiment and the second embodiment according to the present invention have been described. It is considered that in the negative electrode obtainable by these embodiments, the binding enhancing agent is chemically bound on the surface of the silicon negative electrode active material contained in negative electrode active material to exhibit a structure in which the silicon negative electrode active material and binder material are chemically coupled through the binding enhancing agent. Thus, increased binding between the active material and binder material is expected than conventional silicon-based negative electrode. Therefore, such phenomena as the destruction of the electrode structure by repeated charging and discharging; drop off of silicon negative electrode active material from conductive network, and decomposition of the electrolyte at the interface of the broken silicon negative electrode active material; are suppressed. Thus, by using negative electrode according to the present invention in the lithium ion secondary battery, the cycle characteristics of the lithium ion secondary battery can be improved.

### Example

. It will be now described with reference to the following examples and comparative examples of operations and effects of the present invention However, the technical scope of the present invention is not limited to the following examples.

### [Example 1]

### <Preparation of negative electrode>

Silicon powder 40 parts by mass (1µm average particle diameter of primary particles) as the negative electrode active material, polyamic acid 20 parts by mass (Pyre-ML: Registered trademark 5019, the average number of molecular weight 100,000), pyromellitic acid diethyl (PMA-Et) 1 % by mass (with respect to total mass of silicon powder) are mixed in a solvent N-methyl-2- pyrrolidone (NMP) to prepare a negative electrode active material slurry.

Note that the structure of the polyamic acid (Pyre-ML® 5019) is shown in the following chemical formula 3.

[Formula 3]

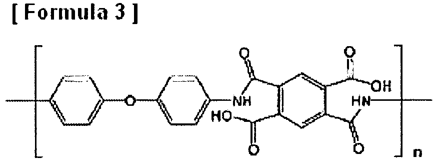

The negative electrode active material slurry obtained is applied on both surfaces of copper foil (10µm thick) as current collector so that the coated thickness after drying will be of 70µm, respectively. After sufficiently drying at 300 °C, the negative electrode active material was dried under vacuum at 80 °C. Then, the negative electrode is produced by heat treatment for 30 minutes at 300 °C (26Pa oxygen partial pressure) under vacuum. Incidentally, the above-described polyamic acid is converted to polyimide (PI) by heat treatment.

### <Preparation of battery>

By opposing a negative electrode and a positive electrode in which metal lithium is pasted or applied on a stainless steel disk, a separator (20µm thick, made of polyolefin) is positioned between the negative and positive electrodes. The laminated or stacked body of the negative electrode, separator and positive electrode is placed in a battery can (made of SUS304). Further, as an electrolyte solution, a solution of concentration of 1.0 mol / I lithium salt, LiPF6 (PC), is dissolved in a mixed solvent of propylene carbonate (PC) and ethylene carbonate (EC) by 1:1 (volume ratio). Then, the electrolyte solution was injected and sealed to the battery can accommodating the laminate to complete a lithium ion secondary battery.

### <Preparation of test specimens for binding test>

A solution was prepared in which a polyamic acid as a binder material (Pyre-ML) (registered trademark) 5019, number average molecular weight of 100,000I is added by 5% by mass in a solvent, and N-methyl-2 - pyrrolidone (NMP), pyromellitic acid diethyl (PMA-Et) as binding enhancing agent is added by 1 % by mass in relation to polyimide. The solution obtained is cast on copper substrate and silicon substrate, and after drying at 80 °C, heat treated at 300 °C under vacuum to prepare a test piece.

### [Example 2]

Both a lithium ion secondary battery and a test piece was prepared in the same manner as in the Example 1 except for the binding enhancing agent that used 1, 2, 3, 4-cyclobutane tetracarboxylic acid diethy (C4A-Et)

### [Example 3]

Both a lithium ion secondary battery and a test piece was prepared in the same manner as in the Example 1 except for the binding enhancing agent that used succinic acid monoethyl (SUC-Et).

### [Example 4]

Both a lithium ion secondary battery and a test piece was prepared in the same manner as in the Example 1 except for the binding enhancing agent that used pyromellitic acid diisopropy (PMA-iPr).

### [Example 5]

Both a lithium ion secondary battery and a test piece were prepared in the same manner as in the Example 1 except for the binding enhancing agent that used a pyromellitic anhydride (PMA).

### [Example 6]

Both a lithium ion secondary battery and a test piece were prepared in the same manner as in the Example 1 except for the binding enhancing agent that used succinic anhydride (SUC).

### [Example 7]

Both a lithium ion secondary battery and a test piece were prepared in the same manner as in the Example 1 except for the binding enhancing agent that used p-phenylene diamine (DAP).

### [Example 8]

Both a lithium ion secondary battery and a test piece were prepared in the same manner as in the Example 1 except for the binding enhancing agent that used 4,4'-diaminodiphenylmethane (DAPM).

### [Example 9]

Both a lithium ion secondary battery and a test piece were prepared in the same manner as in the Example 1 except for the binding enhancing agent that used 4,4'-diaminodiphenyl ether (DAPE).

### [Comparative Example 1]

Both a lithium ion secondary battery and a test piece were prepared in the same manner as in the Example 1 except that the binding enhancing agent was not used.

### [Comparative Example 2]

Both a lithium ion secondary battery and a test piece were prepared in the same manner as in the Comparative Example 1 except for the use of polyvinylidene fluoride (PVDF) as a binder material and not subjected to heat treatment at 300 °C.

### [Comparative Example 3]

Both a lithium ion secondary battery and a test piece were prepared in the same manner as in the Comparative Example 2 except for using pyromellitic acid diethyl (PMA-Et) as a binding enhancing agent.

### [Comparative Example 4]

Both a lithium ion secondary battery and a test piece were prepared in the same manner as in the Comparative Example 2 except for using pyromellitic anhydride (PMA) as a binding enhancing agent

### [Comparative Example 5]

Both a lithium ion secondary battery and a test piece were prepared in the same manner as in the Comparative Example 2 except for using p-phenylene diamine (DAP)as animproved binding enhancing agent.

Note that the structures of binding enhancing agent used in the above Examples and Comparative Examples are represented in the following Table 1.

**[Table 1]**

| Structural Formula | Chemical Nomenclature | Code |
|---|---|---|
| 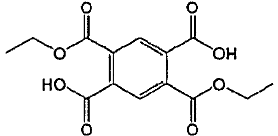 | pyromellitic acid diethyl | PMA-Et |
| 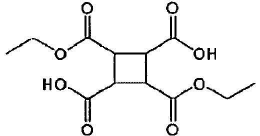 | 1,2,3,4 - cyclobutane tetracarboxylic acid diethyl | C4A-Et |
| 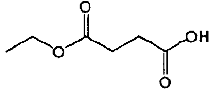 | succinic acid monoethyl | SUC-Et |
| 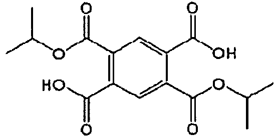 | pyromellitic acid diisopropy | PMA-iPr |
| 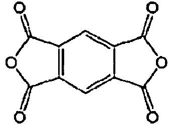 | pyromellitic anhydride | PMA |
| 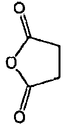 | succinic anhydride | SUC |
| 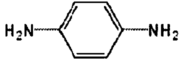 | p-phenylene diamine | DAP |
| 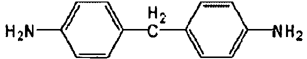 | 4,4'-diaminodiphenylmethane | DAPM |
| 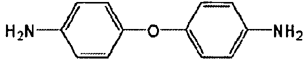 | 4,4'-diaminodiphenyl ether | DAPE |

### < Cycle characteristics>

The cycle characteristics were evaluated by the following method for each of the lithium ion secondary battery prepared above. For each cell, under an atmosphere of 30 °C, and constant-current system (CC, current: 0.1 C), cell is charged to 2.0V, and allowed to rest for 10 minutes thereafter, with subsequent discharge at constant current (CC, current: 0.1 C) to 0.01 V with a rest for 10 minutes after the discharge operation. This charge-discharge process is defined as one cycle, and each cell is subjected to 30 cycles to determine the ratio of discharge capacity at the 30th cycle to the discharge capacity of the first cycle (discharge capacity retention ratio [%]). The results are shown in Table 2 below.

### <Binding evaluation>

On a surface of each test piece or specimen prepared above, the Kapton tape was attached by 1 x 1 cm², and peeled off by pulling the piece vertically, the binding property of binder material with copper and silicon was assessed. The assessment was perfumed to assign three ranks. The piece where the binder material is not peeling is ranked ○, at peeling by 50% with Δ, at peeling entirely with ×. The results are shown in Table 2 below.

**[Table 2]**

| | **Binder material** | **Binding enhancing agent** | **Binding enhancing property** | | **Discharge capacity retention [%]** |
|---|---|---|---|---|---|
| | | | **Binder Cropper** | **Binder-silicon** | |
| **Example 1** | PI | PMA-Et | ○ | ○ | 87 |
| **Example 2** | **PI** | C4A-Et | ○ | ○ | 65 |
| **Example** 3 | PI | SUC-Et | ○ | Δ | 93 |
| **Example 4** | PI | PMA-iPr | ○ | ○ | 91 |
| **Example 5** | PI | PMA | ○ | Δ | 60 |
| **Example 6** | PI | SUC | ○ | ○ | 92 |
| **Example 7** | PI | DAP | ○ | ○ | 02 |
| **Example 8** | PI | DAPM | ○ | ○ | 91 |
| **Example 9** | PI | DAPE | ○ | ○ | 95 |
| **Comp. Ex. 1** | PI | 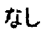 | ○ | × | 24 |
| **Comp. Ex. 2** | PVDF | 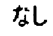 | ○ | ○ | 20 |
| **Comp. Ex.3** | PVDF | PMA-Et | ○ | ○ | 21 |
| **Comp. Ex.4** | PVDF | PMA | ○ | ○ | 19 |
| **Comp. Ex.5** | PVDF | DAP | ○ | ○ | 22 |

From the results of Table 2, in Examples 1 to 9 using a polyimide as the binder material and binding enhancing or improving agent, and I, the binding property of copper foil as current collector and silicon as negative electrode active material exhibits a good binding property with binder material. Further, in the Examples 1-9, a significantly high discharge capacity retention ratio was shown. This improvement in binding property of binder material is considered due to a chemical coupling of silicon and polyimide through a binding enhancing agent.

Moreover, when comparing Examples 1 and 4 with Example 5, in the Examples 1 and 4 where a half ester of PMA is used as binding enhancing agent provide a better discharge capacity retention than Example 5 using acid anhydride of PMA. Similarly, in Example 3 where a half ester of SUC is used provides a better discharge capacity retention ratio than Example 6 using acid anhydride of SUC. Thus, when comparing the half ester and acid anhydride both deliverable from the same carboxylic acid, the half ester shows a higher discharge capacity retention rate than acid anhydride. This may be considered due to a higher reactivity of half ester than acid anhydride with silicon. Further, the discharge capacity retention ratio was also good in Examples 7 to 9 using a polyvalent amine as binding enhancing agent.

On the other hand, in Comparative Example 1 using polyimide as the binder material without using binding enhancing agent, the binding property between silicon and binder material was poor resulting in the low discharge capacity retention ratio. In addition, in Comparative Examples 2 to 5 using polyvinylidene fluoride as a binder material, although a good binding property of copper foil and silicon with binder material was obtained, the discharge capacity retention ratio was low. This binding property of the state before charge-discharge operation is estimated high, but expansion and contraction of the silicon is caused due to repeated charging and discharging, and the binding property between the silicon and binder material is considered to be weakened. Thus, such phenomena as the electrode structure being destroyed; irreversible capacity of silicon dropped from the conductivity network, and electrolytic solution being decomposed in the active surface of silicon broken; would occur what would lead to deterioration in the discharge capacity retention ratio.

Note that the present invention is based on Japanese Patent Application No 2010-173886 filed on August 2, 2010, the disclosure thereof which is incorporated by reference in its entirety.

### DESCRIPTON OF REFERENCE SIGNS

| | |
|---|---|
| 10 | Negative electrode, |
| 11 | Current collector, |
| 13 | Negative electrode active material layer. |

## Claims

1. A negative electrode for a lithium ion secondary battery obtainable by:
preparing a slurry of negative electrode active material by mixing a negative electrode active material containing silicon as a main component, at least one binder material selected from the group consisting of polyimide, polyamide and polyamideimide, and prepolymers of the same, and at least one binding enhancing agent selected from the group consisting of polyvalent carboxylic acid, its derivatives and polyvalent amine in a solvent; and
applying the negative electrode active material on a surface of a current collector and heat treating under anoxic conditions.

2. A negative electrode for a lithium ion secondary battery obtainable by:
preparing a negative electrode active material by mixing a negative electrode active material containing silicon as a main component, and at least one binding enhancing agent selected from the group consisting of polyvalent carboxylic acid, its derivatives and polyvalent amine in a solvent and subsequently removing the solvent;
preparing a slurry of a negative electrode active material by mixing the negative electrode active material with at least one binder material selected from the group consisting of polyimide, polyamide and polyamideimide, and prepolymers of the same, and
applying the negative electrode active material on a surface of a current collector and heat treating under anoxic conditions

3. The negative electrode for a lithium ion secondary battery according to claim 1 or 2, wherein the binding enhancing agent is at least one selected from the half ester of polycarboxylic acid.

4. The negative electrode for a lithium ion secondary battery according to claim 1 or 2, wherein the binding enhancing agent is one selected from the polyvalent amine.

5. A method for manufacturing a negative electrode for a lithium ion secondary battery, comprising steps of:
preparing a slurry of negative electrode active material by mixing a negative electrode active material containing silicon as a main component, at least one binder material selected from the group consisting of polyimide, polyamide and polyamideimide, and prepolymers of the same, and at least one binding enhancing agent selected from the group consisting of polyvalent carboxylic acid, its derivatives and polyvalent amine in a solvent; and
applying the negative electrode active material on a surface of a current collector and heat treating under anoxic conditions.

6. A method for manufacturing a negative electrode for a lithium ion secondary battery, comprising steps of:
preparing a negative electrode active material by mixing a negative electrode active material containing silicon as a main component, and at least one binding enhancing agent selected from the group consisting of polyvalent carboxylic acid, its derivatives and polyvalent amine in a solvent and subsequently removing the solvent;
preparing a slurry of a negative electrode active material by mixing the negative electrode active material with at least one binder material selected from the group consisting of polyimide, polyamide and polyamideimide, and prepolymers of the same, and
applying the negative electrode active material on a surface of a current collector and heat treating under anoxic conditions
